# EUROPÄISCHE PATENTSCHRIFT

(11) **EP 2 470 400 B1**
(45) Veröffentlichungstag und Bekanntmachung des Hinweises auf die Patenterteilung: **18.12.2013**
(21) Anmeldenummer: 10718881.5
(22) Anmeldetag: 24.04.2010
(51) Int. Cl.: B60R 22/34

(54) **SICHERHEITSGURTEINRICHTUNG FÜR EIN FAHRZEUG**
SAFETY BELT DEVICE FOR A VEHICLE
DISPOSITIF DE CEINTURE DE SÉCURITÉ POUR UN VÉHICULE

(30) Priorität: 25.08.2009 DE 102009038840
(43) Veröffentlichungstag der Anmeldung: 04.07.2012
(73) Patentinhaber: Volkswagen Aktiengesellschaft, 38440 Wolfsburg (DE)
(72) Erfinder: DRAMLITSCH, Thomas, 10557 Berlin (DE)
(86) Internationale Anmeldenummer: PCT/EP2010/002542
(87) Internationale Veröffentlichungsnummer: WO 2011/023251

(56) Entgegenhaltungen:
- DE-A1- 10 321 217
- DE-A1-102007 060 268

## Beschreibung

Die Erfindung betrifft eine Sicherheitsgurteinrichtung für ein Fahrzeug nach dem Oberbegriff des Patentanspruches 1.

Bei einer Fahrzeugkollision kann ein Gurtauszug eines am Fahrzeuginsassen angelegten Sicherheitsgurtes dahingehend begrenzt werden, dass lediglich ein eingeschränktes Nachgeben des Sicherheitsgurtes über einen geringen Gurtauszugsweg ermöglicht ist.

So ist aus der DE 10 2006 027 897 A1 eine gattungsgemäße Sicherheitsgurteinrichtung für ein Fahrzeug bekannt, das einen Gurtaufroller mit einem Sicherheitsgurt aufweist. Der Sicherheitsgurt ist auf einer Wickeltrommel des Gurtaufrollers aufgewickelt, die mit einer Sperrscheibe zusammenwirken kann. Im normalen Fahrbetrieb ist die Wickeltrommel unabhängig von der Sperrscheibe frei drehbar. Bei einer Fahrzeugkollision wird jedoch durch abrupte Beschleunigung des Fahrzeuginsassen die Wickeltrommel mit der Sperrscheibe gekoppelt. Dadurch wird eine Vorverlagerung des angegurteten Fahrzeuginsassen verhindert.

Die Sperrscheibe ist über ein Stahlseil mit einer Blockiereinrichtung in Verbindung, in der das Stahlseil über mehrere Windungen einen feststehenden Zylinder umwickelt. Die somit erzeugbare Seilreibung wirkt einer Gurtauszugskraft entgegen. Das Stahlseil ist mit seinem Seilende weiter bis zu einer Freigabeeinrichtung geführt, die in Abhängigkeit von der kollisionsbedingt erzeugten Beschleunigung eine Freigabekraft, dass heißt eine Schubkraft, auf das Stahlseil ausübt. Dadurch kann das Stahlseil entgegen seiner Wickelrichtung um den Zylinder geschoben werden, so dass sich die um den Zylinder gewickelten Stahlseilwicklungen lockern. Auf diese Weise wird kurzzeitig die der Gurtauszugskraft entgegenwirkende Seilreibung derart reduziert, dass ein begrenzter Gurtauszugsweg bereitstellbar ist, bis die Seilwicklungen um den Zylinder wieder gestrafft sind.

Die aus dem feststehenden Zylinder und den um diesen herum geführten Stahlseilwicklungen ausgebildete Blockiereinrichtung ist fertigungstechnisch aufwendig gestaltet. Insbesondere kann im Kollisionsfall ein die Funktionsweise beeinträchtigendes Überlagern von gelockerten Seilwicklungen nur mit großem Aufwand verhindert werden.

Die Aufgabe der Erfindung besteht darin, eine einfach aufgebaute Sicherheitsgurteinrichtung bereitzustellen, die mit geringem Bauteilaufwand betriebssicher funktioniert.

Die Aufgabe ist durch die Merkmale des Patentanspruches 1 gelöst. Bevorzugte Weiterbildungen der Erfindung sind in den Unteransprüchen offenbart.

Gemäß dem Oberbegriff des Patentanspruches 1 weist die Blockiereinrichtung anstelle der Seilwicklungen zumindest ein gurtseitiges Keilelement und ein damit zusammenwirkendes freigabeseitiges Keilelement auf. Die Keilelemente erzeugen mittels ihrer in Reibkontakt bringbaren Keilflächen eine, einer Gurtauszugskraft entgegenwirkende Reibungskraft. Damit kann bei der Montage ein aufwendig durchführbares lagesicheres Verlegen des nur begrenzt formstabilen Stahlseiles innerhalb der Blockiereinrichtung vermieden werden. ckiereinrichtung entspricht der aus dem Stand der Technik bekannten Blockiereinrichtung. Im Kollisionsfall wirkt eine zwischen den Keiletementen erzeugte Reibungskraft der Gurtauszugskraft entgegen. So kann bei einer entsprechend gewählten Reibpaarung zwischen den Keilflächen eine Keilreibung erzeugt werden, die bei einer kollisionsbedingten Fahrzeugverzögerung die Wickeltrommel des Sicherheitsgurts zuverlässig blockiert, gegebenenfalls unter Mitwirkung einer auf das freigabeseitige Keilelement ausgeübten Haltekraft, die in gleicher Richtung wie die erzeugte Reibungskraft wirkt. Eine zeitverzögert nach dem Blockieren erfolgende Freigabe kann bereits durch eine sehr geringe Steuerkraft beziehungsweise Freigabekraft ausgehend von der Freigabeeinrichtung eingeleitet werden, die in Richtung der Gurtauszugskraft wirkt. Eine Sicherheitsgurteinrichtung nach dem oberbegriff von Anspruch 1 ist in der DE 103 21 217 A1 offenbart.

Im Kollisionsfall wird durch das abrupte Beschleunigen des angegurteten Fahrzeuginsassen der Sicherheitsgurt mit der Gurtauszugskraft belastet, die auf das gurtseitige Keilelement der Blockiereinrichtung übertragbar ist, und zwar unter Aufbau der, der Gurtauszugskraft entgegenwirkenden Reibungskraft zwischen den Keilflächen, mittels der das gurtseitige Keilelement blockiert werden kann.

Für eine nach dem Blockieren zeitverzögert erfolgende, begrenzte Freigabe der Blockiereinrichtung kann die Freigabeeinrichtung kurzzeitig eine Freigabekraft erzeugen, mittels der das freigabeseitige Keilelement zusammen mit dem gurtseitigen Keilelement um einen, mit dem Gurtauszugsweg korrespondierenden begrenzten Stellweg verstellbar ist. Dabei kann die Freigabeeinrichtung so ausgelegt sein, dass sie erst bei einer vorgegebenen Grenzbeschleunigung beziehungsweise -verzögerung aktiviert wird.

Die von der Freigabeeinrichtung auf das freigabeseitige Keilelement ausgeübte Freigabekraft stimmt dabei in ihrer Wirkrichtung mit der der kollisionsbedingten Gurtauszugskraft überein.

Nach der Erfindung sind die Keilelemente zueinander um eine gemeinsame, ortsfeste Drehachse drehgelagert. Im Kollisionsfall erzeugt damit die Gurtauszugskraft ein Gurtauszugsmoment am gurtseitigen, drehgelagerten Keilelement, das sich in Reibkontakt mit dem insbesondere ebenfalls drehgelagerten freigabeseitigen Keilelement befindet.

Das gurtseitige Keilelement ist dabei mittels eines dem Gurtauszugsmoment entgegengerichteten, zwischen den beiden Keilflächen erzeugten Reibmoments blockierbar, gegebenenfalls unter Ausübung eines Haltemoments, das von der Freigabeeinrichtung erzeugt wird und das Reibmoment unterstützt.

Die beiden oben genannten Keilelemente können als radial innere und äußere Keilelemente ausgebildet sein, die jeweils eine nach innen gerichtete oder nach außen gerichtete kegelförmige Mantelfläche als Keilfläche aufweisen. Bekanntermaßen hängt die als Reaktion auf die Gurtauszugskraft erzeugte Reibungskraft von der Größe einer Normalkraft ab, mit der die beiden Keilflächen der Keilelemente aneinander gedrückt sind. Zur Einstellung der zwischen den Keilflächen erzeugbaren Reibungskraft können daher die beiden Keilelemente über eine Vorspannkraft gegeneinander gedrückt werden, die mittels geeigneter Spannmittel auf die Keilanordnung ausgeübt werden kann.

In einer weiteren Ausführungsform kann die Blockiereinrichtung eine Führungsbahn mit Führungswänden aufweisen, zwischen denen die Keilelemente angeordnet sind. Die Führungsbahn kann sich in Linearrichtung oder zum Beispiel in einer Umfangsrichtung entlang einer Kreisbahn erstrecken.

In einer sich nach einer Fahrzeugkollision ergebenden Blockierstellung der Blockiereinrichtung können die Keilelemente zwischen den Führungswänden eingeklemmt sein. Zur Freigabe dieser Klemmverbindung wird von der Freigabeeinrichtung kurzzeitig eine Freigabekraft auf das freigabeseitige Keilelement ausgeübt. Diese wirkt in gleiche Richtung wie die auf das gurtseitige Keilelement ausgeübte Gurtauszugskraft. Durch Ausüben der Freigabekraft kann daher die Klemmverbindung der Keilelemente mit den Führungswänden kurzzeitig gelöst werden, wodurch die Keilelemente über einen Stellweg entlang der Führungsbahn verschiebbar sind.

Zur Erzeugung einer wirksamen Klemmverbindung zwischen den Keilelementen und der Führungswände der Führungsbahn können sich die Keilflächen der Keilelemente in Querrichtung zur Führungsbahn erstrecken. Die zwischen den Keilflächen erzeugbare Reibungskraft wird aufgrund der in Normalrichtung auf die Keilflächen wirkenden Klemmkräfte stark erhöht, so dass bei einem kollisionsbedingten Ausüben der Gurtauszugskraft auf das gurtseitige Keilelement die Winkeltrommel zuverlässig blockiert ist. Demgegenüber wird bei Ausübung der Freigabekraft auf das freigabeseitige Keilelement die oben genannte Klemmverbindung zwischen den Keilelementen und den Führungswänden geschwächt, wodurch automatisch auch die entgegen der Freigabekraft wirkende Reibungskraft reduziert wird. Bei entsprechender Reibpaarung genügt bereits eine geringe Freigabekraft, damit sich das freigabeseitige Keilelement zusammen mit dem gurtseitigen Keilelement entlang der Führungsbahn um einen Stellweg verschieben kann.

Die Wirkungsweise der Keilanordnung wird erhöht, wenn Keilflächen der Keilelemente mit großem Reibungskoeffizienten ausgebildet werden. Im Vergleich dazu können die Reibflächen zwischen den Keilelementen und den Führungswänden mit geringeren Reibungskoeffizienten ausgebildet sein.

In einer technischen Realisierung können die Keilelemente als Keilringe ausgebildet sein, die auf einem feststehenden Zylinder drehgelagert sind. Die Führungsbahn kann dabei in der Zylindermantelfläche ausgebildet sein. Von den Keilringen kann beispielhaft ein mittlerer Keilring in Axialrichtung des Zylinders beidseitig von äußeren Keilringen begrenzt sein, wobei der mittlere Keilring das freigabeseitige Keilelement sein kann, während die äußeren Keilringe jeweils gurtseitige Keilelemente sein können.

Nachfolgend sind drei Ausführungsbeispiele der Erfindung anhand der beigefügten Figuren beschrieben.

Es zeigen:
- Fig. 1: in einer schematischen Darstellung eine Sicherheitsgurteinrichtung gemäß dem ersten Ausführungsbeispiel;
- Fig. 2: in einer Detailansicht den Gurtaufroller sowie die nachgeschaltet Blockiereinrichtung der Sicherheitsgurteinrichtung;
- Fig. 3: in einer vergrößerten Darstellung die Blockiereinrichtung;
- Fig. 4: eine Blockiereinrichtung gemäß dem zweiten Ausführungsbeispiel;
- Fig. 5 und 6: die in der Fig. 4 verwendeten Keilelemente jeweils in Alleinstellung; und
- Fig. 7: in einer grob schematischen Ansicht eine Blockiereinrichtung gemäß dem dritten Ausführungsbeispiel.

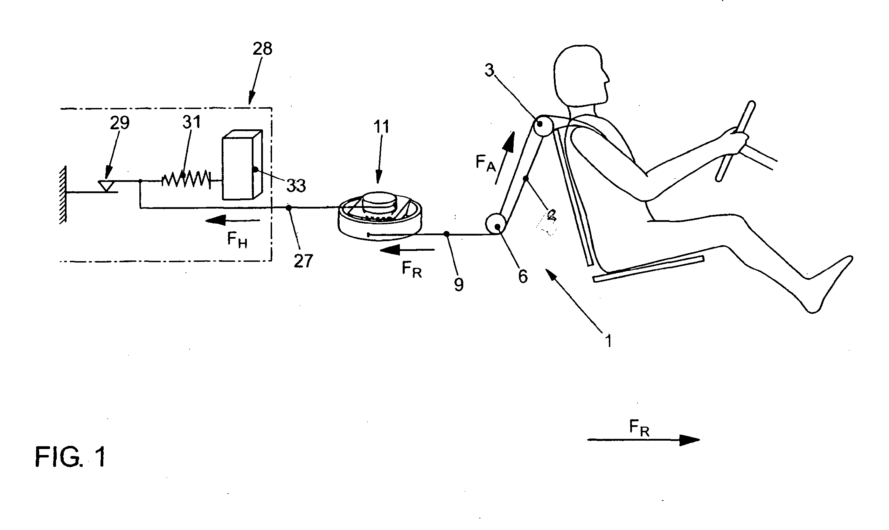

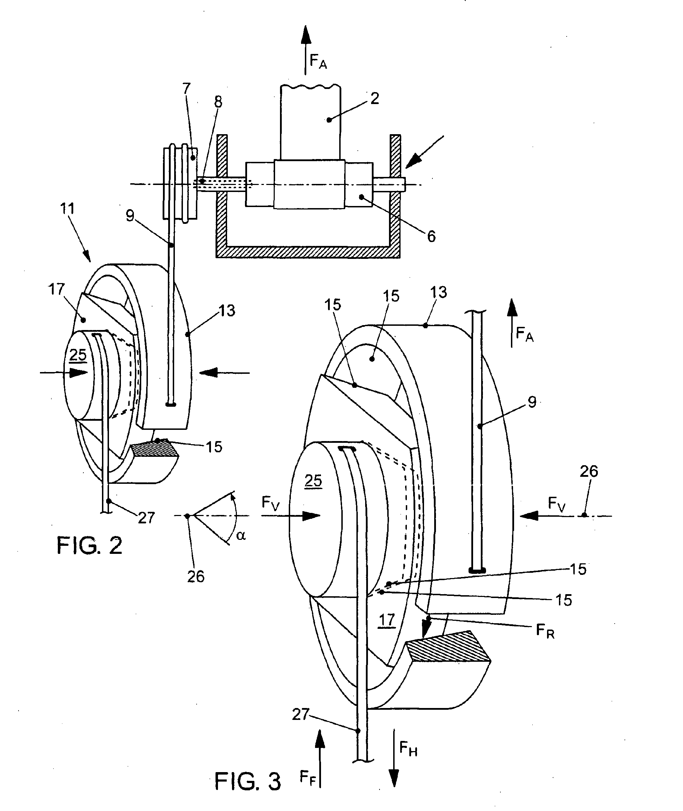

In der Fig. 1 ist eine Sicherheitsgurteinrichtung gezeigt, die einen Gurtaufroller 1 mit einem Sicherheitsgurt 2 aufweist, der an einem Fahrzeuginsassen angelegt ist. Der Sicherheitsgurt 2 ist über einen Umlenkbügel 3 zum Gurtaufroller 1 geführt. Dieser weist gemäß der Fig. 2 eine Wickeltrommel 6 zum Auf- und Abwickeln des Sicherheitsgurtes 2 sowie eine Sperrscheibe 7 auf, die koaxial zu der Wickeltrommel 6 angeordnet ist.

Im Normalbetrieb, etwa beim Anlegen oder Ablegen des Sicherheitsgurtes 2, ist die Wickeltrommel 6 unabhängig von der in der Fig. 2 gezeigten Sperrscheibe 7 frei drehbar. So kann beim Anlegen des Sicherheitsgurtes 2 durch den Fahrzeuginsassen der Sicherheitsgurt 2 entgegen der Kraft einer nicht gezeigten Rückstellfeder von der Wickeltrommel 6 abgewickelt werden.

Bei einer Fahrzeugkollision wird der angegurtete Fahrzeuginsasse abrupt in Fahrtrichtung beschleunigt. Das somit auf die Wickeltrommel 6 übertragene Drehmoment bewirkt, dass Flieh- und/oder Trägheitskräfte auf ein nur gestrichelt angedeutetes Kupplungselement 8 einwirken, das eine feste Verbindung zwischen der Wickeltrommel 6 und der Sperrscheibe 7 herstellt. Die Sperrscheibe 7 ist mittels einer Blockiereinrichtung 11 drehfest gehalten, wodurch ein Gurtauszug des Sicherheitsgurtes von der Wickeltrommel 6 und damit eine Vorverlagerung des angegurteten Fahrzeuginsassen zunächst blockiert ist.

Um die in der Fig. 2 gezeigte Sperrscheibe 7 ist ein Stahlseil 9 gewickelt, das die Sperrscheibe 7 mit der Blockiereinrichtung 11 verbindet. Dabei ist ein Seilende des Stahlseils 9 an einer zylindrischen Außenumfangsseite eines ringförmigen Keilelements 13 befestigt, dessen Innenseite eine radial nach innen weisende kegelförmige Keilfläche 15 aufweist. Der Keilring 13 ist in den Fig. 2 und 3 aus Gründen der Übersichtlichkeit in teilweiser Schnittdarstellung gezeigt, aus der das Profil des Keilringes 13 hervorgeht.

An seiner größeren Durchmesserseite ist ein mittleres Keilelement 17 in den äußeren Keilring 13 eingesetzt, das mittels korrespondierender Keilflächen 15 in Anlage mit der radial zugewandten Keilfläche 15 des Keilringes 13 ist. Die Keilflächen 15 des gurtseitigen Keilrings 13 und des mittleren Keilelements 17 bilden ein erstes Reibungspaar. Diesem ist kaskadenartig ein zweites Reibungspaar nachgeschaltet, das aus einer kegelförmigen inneren Reibfläche 15' dies mittleren Keilelements 17 und einer korrespondierenden äußeren Reibfläche 15" eines freigabeseitigen Keilelements 25 besteht. Die aus den Keilelementen 13, 17 und 25 gebildete Keilanordnung ist in Axialrichtung durch ein nicht dargestelltes Vorspannmittel mit einer Vorspannkraft Fᵥ verspannt. Zusätzlich sind die Keilelemente 13, 17, 25 um eine Drehachse 26 drehbar gelagert.

An der Außenumfangsseite des freigabeseitigen Keilelementes 25 ist ein weiteres Stahlseil 27 befestigt, das zu einer in der Fig. 1 gezeigten Freigabeeinrichtung 28 geführt ist und über ein Federelement 31 mit einem Sensorkörper 33 verbunden ist. Der Sensorkörper 33 ist bei einer Fahrzeugverzögerung in der Fahrtrichtung FR über einen Federweg verschiebbar. Wie aus der Fig. 1 weiter hervorgeht, ist das Seilende des Stahlseils 27 im Bereich zwischen einem Kraftbegrenzer 29 und dem Federelement 31 angekoppelt.

Bei einer Fahrzeugkollision wird zunächst der Sensorkörper 33 in der Fahrtrichtung FR beschleunigt, und zwar unter Aufbau einer Federkraft F des Federelementes 31, der einer inneren Elastizität des angegurteten Fahrzeuginsassen nachbildet. Das Federelement 31 wirkt als ein Verzögerungsglied, wodurch sich der Sensorkörper 33 unter Berücksichtigung der inneren Elastizität des Fahrzeuginsassen zeitlich verzögert nach der Fahrzeugkollision nach vorne bewegen kann.

Wie bereits oben erwähnt kommt es im Kollisionsfall zu einer abrupten Beschleunigung des Fahrzeuginsassen. Dadurch wird gemäß der Fig. 3 der äußere Keilring 13 der Blockiereinrichtung 11 über das Stahlseil 9 mit einer Gurtauszugskraft F_{A} beaufschlagt. Das zur Freigabeeinrichtung 28 führende Seil 27 ist mit einer der Gurtauszugskraft F_{A} entgegengerichteten, geringfügigen Rückhaltekraft F_{H} beaufschlagt. Diese reicht aus, um zusammen mit den beiden Reibungspaaren zwischen dem freigabeseitigen Keilelement 25 und dem gurtseitigen Keilelement 13 die Sperrscheibe 7 zu blockieren. Nach einer geringfügigen zeitlichen Verzögerung schiebt der Sensorkörper 33 der Freigabeeinrichtung 28 das Stahlseil 27 kurzzeitig mit einer Freigabekraft F_{F} in Richtung auf die Blockiereinrichtung 11. Die Wirkrichtung der Freigabekraft F_{F} ist dabei gleich mit der der Gurtauszugskraft F_{A}, Auf diese Weise kann sich die Keilanordnung bestehend aus den Keilelementen 13, 17 und 25 um einen vorgegebenen Drehwinkel α um die Drehachse 26 drehen, wodurch ein begrenzter Gurtauszugsweg bereitgestellt wird, mit dem die Belastung des Fahrzeuginsassen im Brustkorbbereich reduziert werden kann.

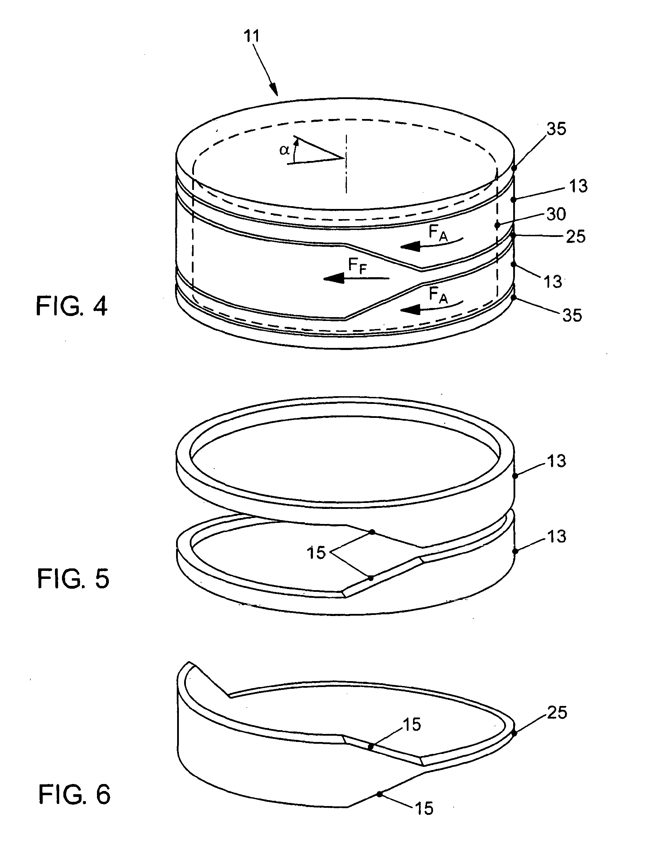

In den Fig. 4 bis 6 ist die Blockiereinrichtung 11 gemäß dem zweiten Ausführungsbeispiel gezeigt. Die Blockiereinrichtung 11 gemäß der Fig. 4 weist einen feststehenden Tragzylinder 30 auf, an dessen Umfangsseite drei ringförmige Keilelemente 13, 25 gelagert sind. Der mittlere Keilring 25 ist dabei wiederum das freigabeseitige Keilelement, während die äußeren Keilringe 13, 13 als gurtseitige Keilelemente wirken. Die Keilringe 13, 25 sind in Umfangsrichtung drehbar auf dem Zylinder 30 gelagert sowie in Axialrichtung mittels stirnseitiger Führungswände 35 gehalten. An diesen sind die Keilringe 13, 25 in Umfangsrichtung über eine festgelegte, kreisförmige Führungsbahn geführt.

Gemäß den Fig. 4 bis 6 weisen die Keilringe 13, 25 miteinander korrespondierende Keilflächen 15 auf, die sich in Radialrichtung quer zu der zwischen den Führungswänden 35 gebildeten Führungsbahn erstrecken. Die beiden gurtseitigen Keilringe 13 sind in nicht gezeigter Weise mit dem zum Gurtaufroller 1 führenden Stahlseil 9 in Verbindung, während der mittlere, freigabeseitige Keilring 25 mit dem zur Freigabeeinrichtung 28 führenden Stahlseil 27 gekoppelt ist (nicht gezeigt). Im Kollisionsfall werden daher die äußeren Keilringe 13 mit der Gurtauszugskraft F_{A} beaufschlagt, wodurch gemäß der Fig. 4 mit einem Drehmoment im Uhrzeigersinn belastet sind. Dadurch wandern die äußeren Keilringe 13 entlang der Keilflächen 15 in Axialrichtung nach außen gegen die Führungswände 35, wodurch sich die Keilringe 13 zwischen den Führungswänden 35 verklemmen und damit einen Gurtauszug blockieren.

In geringfügiger zeitlicher Verzögerung wird durch die Vorverlagerung des Sensorkörpers 33 eine Freigabekraft F_{F} auf den mittleren freigabeseitigen Keilring 25 ausgeübt, die dieselbe Wirkrichtung wie die Gurtauszugskraft F_{A} aufweist. Auf diese Weise wird die Klemmverbindung der Keilringe 13, 25 mit den Führungswänden 35 und damit auch die auf die Keilringe 13, 25 wirkenden Reibungskräfte geschwächt. Die gesamte Keilanordnung bestehend aus den Keilringen 13, 25 kann sich daher Drehwinkel α in der Uhrzeigerrichtung drehen kann. Dadurch wird der Sicherheitsgurt 2 um einen begrenzten Gurtauszugsweg freigegeben.

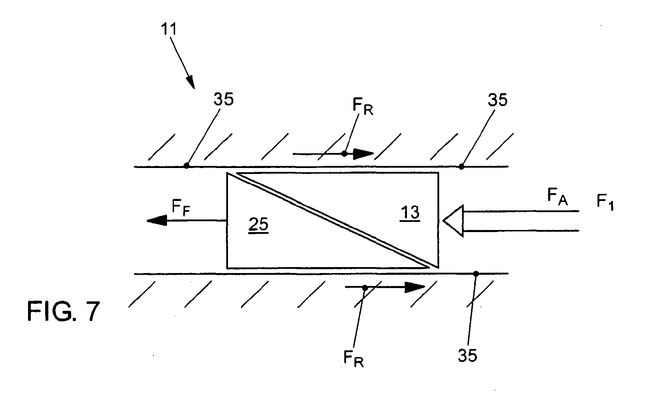

In der Fig. 7 ist grob schematisch eine Blockiereinrichtung 11 gemäß dem dritten Ausführungsbeispiel gezeigt, deren Funktionsweise der Blockiereinrichtung der Fig. 4 bis 6 gleicht. Demzufolge sind ein gurtseitiges Keilelement 13 und ein freigabeseitiges Keilelement 25 in einer durch Führungswände 35 begrenzt linearen Führungsbahn geführt. Die beiden Keilelemente 13, 25 sind über Keilflächen 15 miteinander in Anlage.

Im Kollisionsfall wirkt die Gurtauszugskraft F_{A} auf das gurtseitige Keilelement 13, wodurch sich die Keilelemente 13, 25 zwischen den Führungswänden 35 verklemmen und somit einen Gurtauszug blockieren. Zeitlich geringfügig verzögert wird von der nicht gezeigten Freigabeeinrichtung 28 kurzzeitig eine geringfügige Freigabekraft F_{F} erzeugt, mit der das freigabeseitige Keilelement 25 beaufschlagt wird. Dadurch wird die Klemmverbindung der Keilelemente 13, 25 mit den Führungswänden 35 gelöst wird. Auf diese Weise kann sich die gesamte Keilanordnung bestehend aus den beiden Keilelementen 13, 25 um einen begrenzten Gurtauszugsweg in der Fig. 7 nach links bewegen, bis das gurtseitige Keilelement 25 abermals eine Klemmverbindung mit dem freigabeseitigen Keilelemente 25 und den Führungswänden 35 erzeugt.

### Bezugszeichenliste

- 1: Gurtaufroller
- 2: Sicherheitsgurt
- 6: Wickeltrommel
- 7: Sperrscheibe
- 8: Kupplungselement
- 9: Stahlseil
- 11: Blockiereinrichtung
- 13: gurtseitiges Keilelement
- 15: Keilflächen, 15', 15" Reibflächen
- 17: mittleres Keilelement
- 25: freigabeseitiges Keilelement
- 27: Stahlseil
- 29: Kraftbegrenzer
- 30: Tragzylinder
- 31: Federelement
- 33: Sensorkörper
- 28: Freigabeeinrichtung
- 29: Tragzylinder
- 35: Führungswände
- F_{A}: Gurtauszugskraft
- F_{F}: Freigabekraft
- F_{R}: Reibungskraft
- F_{H}: Haltekraft
- FR: Fahrtrichtung
- α: Drehwinkel

## Patentansprüche

1. Sicherheitsgurteinrichtung für ein Fahrzeug, mit einer Blockiereinrichtung (11), die im Kollisionsfall einen Gurtauszug eines an einem Fahrzeuginsassen angelegten Sicherheitsgurts (2) blockiert, und einer auf die Blockiereinrichtung (11) einwirkenden Freigabeeinrichtung (28), die die Blockiereinrichtung (11) für einen begrenzten Gurtauszugsweg des Sicherheitsgurts (2) freigibt, wobei die Blockiereinrichtung (11) zumindest ein gurtseitiges Keilelemente (13) und ein freigabeseitiges Keilelement (25) aufweist, die mittels ihrer in Reibkontakt bringbaren Keilflächen (15) eine, einer Gurtauszugskraft (F_{A}) entgegenwirkende Reibungskraft (F_{R}) erzeugen, **dadurch gekennzeichnet, dass** ein drittes Keilelement (17, 13) vorgesehen ist, das mit dem gurtseitigen Keilelement (13) und dem freigabeseitigen Keilelement (25) um eine gemeinsame ortsfeste Drehachse (26) drehbar ist.

2. Sicherheitsgurteinrichtung nach Anspruch 1, **dadurch gekennzeichnet, dass** im Kollisionsfall die Gurtauszugskraft (F_{A}) vom Sicherheitsgurt (2) auf das gurtseitige Keilelement (13) übertragbar ist, und zwar unter Aufbau einer der Gurtauszugskraft (F_{A}) entgegenwirkenden Reibkraft (F_{R}) zwischen den Keilflächen (15), mittels der das gurtseitige Keilelement (13) blockiert ist.

3. Sicherheitsgurteinrichtung nach Anspruch 1 oder 2, **dadurch gekennzeichnet, dass** bei einer zeitverzögert nach dem Blockieren folgenden Freigabe der Blockiereinrichtung (11) die Freigabeeinrichtung (28) das freigabeseitige Keilelement (25) zusammen mit dem gurtseitigen Keilelement (13) um einen mit dem Gurtauszugsweg korrespondierenden Stellweg verstellt.

4. Sicherheitsgurteinrichtung nach einem der Ansprüche 1, 2 oder 3, **dadurch gekennzeichnet, dass** die Freigabeeinrichtung (28) im Kollisionsfall nach erfolgtem Blockierzustand eine Freigabekraft (F_{F}) auf das freigabeseitige Keilelement (25) ausübt, deren Wirkrichtung mit der der Gurtauszugskraft (F_{A}) übereinstimmt.

5. Sicherheitsgurteinrichtung nach einem der vorhergehenden Ansprüche, **dadurch gekennzeichnet, dass** die Gurtauszugskraft (F_{A}) ein Gurtauszugsmorhent auf das gurtseitige Keilelement (13) ausübt, das mittels eines entgegengerichteten, zwischen den Keilflächen (15) erzeugten Reibmoments blockierbar ist.

6. Sicherheitsgurteinrichtung nach Anspruch 5, **dadurch gekennzeichnet, dass** die Keilflächen (15) radial nach außen beziehungsweise nach innen gerichtete kegelförmige Mantelflächen der Keilelemente (13, 25) sind.

7. Sicherheitsgurteinrichtung nach Anspruch 5 oder 6, **dadurch gekennzeichnet, dass** zur Einstellung der zwischen den Keilflächen (15) erzeugbaren Reibungskraft (F_{R}) die Keilelemente (13, 25) in Axialrichtung über eine Vorspannkraft (F_{V}) gegeneinander gedrückt sind.

8. Sicherheitsgurteinrichtung nach einem der vorhergehenden Ansprüche, **dadurch gekennzeichnet, dass** die Keilelemente (13, 25) zwischen Führungswänden (35) in einer linearen oder in Umfangsrichtung geführten Führungsbahn angeordnet sind.

9. Sicherheitsgurteinrichtung nach Anspruch 8, **dadurch gekennzeichnet, dass** in einer Blockierstellung die Keilelemente (13, 25) zwischen den Führungswänden (35) eingeklemmt sind, und dass zur Freigabe der Klemmverbindung das freigabeseitige Keilelement (25) über einen Stellweg entlang der Führungsbahn verstellbar ist.

10. Sicherheitsgurteinrichtung nach einem der Ansprüche 8 oder 9, **dadurch gekennzeichnet, dass** die Keilflächen (15) der Keilelemente (13, 25) quer zur Führungsbahn angeordnet sind.

11. Sicherheitsgurteinrichtung nach Anspruch 10, **dadurch gekennzeichnet, dass** im Kollisionsfall aufgrund der Klemmverbindung eine Reibungskraft (F_{R}) zwischen den Keilelementen (13, 25) und/oder den Führungswänden (35) aufbaubar ist, mit der das gurtseitige Keilelement (13) blockiert ist, und bei Ausübung der Freigabekraft (F_{F}) auf das freigabeseitige Keilelement (25) die Klemmverbindung zur Verstellung der Keilelemente (13, 25) schwächbar ist.

12. Sicherheitsgurteinrichtung nach Anspruch 8, 9, 10 oder 11, **dadurch gekennzeichnet, dass** die Keilflächen (15) der Keilelemente (13, 25) mit großem Reibungskoeffizienten ausgebildet sind und im Vergleich dazu die Reibflächen zwischen den Keilelementen (13, 25) und den Führungswänden (35) mit geringem Reibungskoeffizienten ausgebildet sind.

13. Sicherheitsgurteinrichtung nach einem der vorhergehenden Ansprüche, **dadurch gekennzeichnet, dass** die Keilelemente (13, 25) als Keilringe ausgebildet sind, die insbesondere auf einem Zylinder (30) gelagert sind, und von denen ein mittlerer Keilring (25) in Axialrichtung beidseitig von äußeren Keilringen (13, 13) begrenzt ist.

## Claims

1. Safety belt device for a vehicle, with a blocking device (11) which, in the event of a collision; blocks a belt extension of a safety belt (2) placed against a vehicle occupant, and with a release device (28) which acts on the blocking device (21) and releases the blocking device (11) for a limited belt extension distance of the safety belt (2), wherein the blocking device (11) has at least one belt-side wedge element (13) and a release-side wedge element (25) which wedge elements, by means of their wedge surfaces (15) which can be brought into frictional contact, produce a frictional force (F_{R}) opposed to a belt extension force (F_{A}), **characterized in that** a third wedge element (17, 13) is provided, which wedge element is rotatable together with the belt-side wedge element (13) and the release-side wedge element (25) about a common, positionally fixed axis of rotation (26).

2. Safety belt device according to Claim 1, **characterized in that**, in the event of a collision, the belt extension force (F_{A}) can be transmitted from the safety belt (2) to the belt-side wedge element (13), specifically with a frictional force (F_{R}) opposed to the belt extension force (F_{A}) being built up between the wedge surfaces (15), by means of which frictional force the belt-side wedge element (13) is blocked.

3. Safety belt device according to Claim 1 or 2, **characterized in that**, in the event of a release of the blocking device (11) following with a time delay after the blocking, the release device (28) adjusts the release-side wedge element (25) together with the belt-side wedge element (13) by an adjustment distance corresponding to the belt extension distance.

4. Safety belt device according to one of Claims 1, 2 or 3, **characterized in that**, in the event of a collision, after a blocking state has occurred, the release device (28) exerts a release force (F_{F}) on the release-side wedge element (25), the direction of action of which release force coincides with that of the belt extension force (F_{A}).

5. Safety belt device according to one of the preceding claims, **characterized in that** the belt extension force (F_{A}) exerts a belt extension moment on the belt-side wedge element (13) which can be blocked by means of an opposed moment of friction produced between the wedge surfaces (15).

6. Safety belts device according to Claim 5, **characterized in that** the wedge surfaces (15) are radially outwardly or inwardly directed conical circumferential surfaces of the wedge elements (13, 25).

7. Safety belt device according to Claim 5 or 6, **characterized in that**, in order to set the frictional force (F_{R}) which can be produced between the wedge surfaces (15), the wedge elements (13, 25) are pressed against each other in the axial direction via a prestressing force (F_{V}).

8. Safety belt device according to one of the preceding claims, **characterized in that** the wedge elements (13, 25) are arranged between guide walls (35) in a linear guide track or a guide track guided in the circumferential direction.

9. Safety belt device according to Claim 8, **characterized in that**, in a blocking position, the wedge elements (13, 25) are clamped between the guide walls (35), and **in that**, in order to release the clamping connection, the release-side wedge element (25) is adjustable over an adjustment distance along the guide path.

10. Safety belt device according to either of Claims 8 and 9, **characterized in that** the wedge surfaces (15) of the wedge elements (13, 25) are arranged transversely with respect to the guide track.

11. Safety belt device according to Claim 10, **characterized in that**, in the event of a collision, a frictional force (F_{R}) can be built up between the wedge elements (13, 25) and/or the guide walls (35) because of the clamping connection, said frictional force being used to block the belt-side wedge element (13), and, when the release force (F_{F}) is exerted on the release-side wedge element (25), the clamping connection can be weakened in order to adjust the wedge elements (13, 25).

12. Safety belt device according to Claim 8, 9, 10 or 11, **characterized in that** the wedge surfaces (15) of the wedge elements (13, 25) are formed with a large coefficient of friction and, in comparison thereto, the friction surfaces between the wedge elements (13, 25) and the guide walls (35) are formed with a low coefficient of friction.

13. Safety belt device according to one of the preceding claims, **characterized in that** the wedge elements (13, 25) are designed as wedge rings which are mounted in particular on a cylinder (30) and of which a central wedge ring (25) is bounded on both sides in the axial direction by outer wedge rings (13, 13).

## Revendications

1. Dispositif de ceinture de sécurité pour un véhicule, comprenant un dispositif de blocage (11) qui, en cas de collision, bloque une sortie d'une ceinture de sécurité (2) appliquée contre un occupant du véhicule, et un dispositif de libération (28) agissant sur le dispositif de blocage (11), lequel dispositif de libération libère le dispositif de blocage (11) pour une course de sortie de ceinture limitée de la ceinture de sécurité (2), le dispositif de blocage (11) comprenant au moins un élément cunéiforme (13) côté ceinture et un élément cunéiforme (25) côté libération, lesquels génèrent, au moyen de leurs surfaces cunéiformes (15) pouvant être amenées en contact de friction, une force de friction (F_{R}) agissant à l'encontre d'une force de sortie de ceinture (F_{A}), **caractérisé en ce qu'**un troisième élément cunéiforme (17, 13) est prévu, lequel peut tourner avec l'élément cunéiforme (13) côté ceinture et l'élément cunéiforme (25) côté libération autour d'un axe de rotation (26) fixe commun.

2. Dispositif de ceinture de sécurité selon la revendication 1, **caractérisé en ce qu'**en cas de collision, la force de sortie de ceinture (F_{A}) peut être transmise de la ceinture de sécurité (2) à l'élément cunéiforme (13) côté ceinture, et ce avec établissement d'une force de friction (F_{R}), entre les surfaces cunéiformes (15), agissant à l'encontre de la force de sortie de ceinture (F_{A}), au moyen de laquelle force de friction l'élément cunéiforme (13) côté ceinture est bloqué.

3. Dispositif de ceinture de sécurité selon la revendication 1 ou 2, **caractérisé en ce qu'**en cas de libération retardée, succédant au blocage, du dispositif de blocage (11), le dispositif de libération (28) déplace l'élément cunéiforme (25) côté libération, conjointement avec un l'élément cunéiforme (13) côté ceinture, sur une course de réglage correspondant à la course de sortie de ceinture.

4. Dispositif de ceinture de sécurité selon l'une quelconque des revendications 1, 2 ou 3, **caractérisé en ce qu'**en cas de collision, le dispositif de libération (28) exerce, une fois l'état de blocage réalisé, une force de libération (F_{F}) sur l'élément cunéiforme (25) côté libération, dont la direction d'action coïncide avec celle de la force de sortie de ceinture (F_{A}).

5. Dispositif de ceinture de sécurité selon l'une quelconque des revendications précédentes, **caractérisé en ce que** la force de sortie de ceinture (F_{A}) exerce un moment de sortie de ceinture sur l'élément cunéiforme (13) côté ceinture, lequel élément cunéiforme côté ceinture peut être bloqué au moyen d'un moment de friction opposé généré entre les surfaces cunéiformes (15).

6. Dispositif de ceinture de sécurité selon la revendication 5, **caractérisé en ce que** les surfaces cunéiformes (15) sont des surfaces d'enveloppe coniques des éléments cunéiformes (13, 25) orientées radialement vers l'extérieur ou vers l'intérieur.

7. Dispositif de ceinture de sécurité selon la revendication 5 ou 6, **caractérisé en ce que** pour le réglage de la force de friction (F_{R}) pouvant être générée entre les surfaces cunéiformes (15), les éléments cunéiformes (13, 25) sont pressés l'un contre l'autre dans la direction axiale par une force de précontrainte (F_{V}).

8. Dispositif de ceinture de sécurité selon l'une quelconque des revendications précédentes, **caractérisé en ce que** les éléments cunéiformes (13, 25) sont disposés entre des parois de guidage (35) dans une voie de guidage linéaire ou guidée dans la direction périphérique.

9. Dispositif de ceinture de sécurité selon la revendication 8, **caractérisé en ce que**, dans une position de blocage, les éléments cunéiformes (13, 25) sont serrés entre les parois de guidage (35), et **en ce que**, pour la libération de la liaison par serrage, l'élément cunéiforme (25) côté libération peut être déplacé sur une course de réglage le long de la voie de guidage.

10. Dispositif de ceinture de sécurité selon l'une des revendications 8 ou 9, **caractérisé en ce que** les surfaces cunéiformes (15) des éléments cunéiformes (13, 25) sont disposées transversalement par rapport à la voie de guidage.

11. Dispositif de ceinture de sécurité selon la revendication 10, **caractérisé en ce qu'**en cas de collision, en raison de la liaison par serrage, une force de friction (F_{R}) peut être établie entre les éléments cunéiformes (13, 25) et/ou les parois de guidage (35), à l'aide de laquelle force de friction l'élément cunéiforme (13) côté ceinture est bloqué, et lorsque la force de libération (F_{F}) est exercée sur l'élément cunéiforme (25) côté libération, la liaison par serrage peut être affaiblie en vue du déplacement des éléments cunéiformes (13, 25).

12. Dispositif de ceinture de sécurité selon la revendication 8, 9, 10 ou 11, **caractérisé en ce que** les surfaces cunéiformes (15) des éléments cunéiformes (13, 25) sont réalisées de manière à présenter des coefficients de friction élevés et, par comparaison avec cela, les surfaces de friction entre les éléments cunéiformes (13, 25) et les parois de guidage (35) sont réalisées de manière à présenter des coefficients de friction faibles.

13. Dispositif de ceinture de sécurité selon l'une quelconque des revendications précédentes, **caractérisé en ce que** les éléments cunéiformes (13, 25) sont réalisés sous forme de bagues cunéiformes qui sont en particulier montées sur un cylindre (30), et parmi lesquelles une bague cunéiforme (25) centrale est limitée des deux côtés dans la direction axiale par des bagues cunéiformes (13, 13) extérieures.
